# EUROPEAN PATENT APPLICATION

(11) **EP 2 770 433 A1**
(43) Date of publication of application: **27.08.2014**
(21) Application number: 14020004.9
(22) Date of filing: 15.01.2014
(51) Int. Cl.: G06F 11/07, H04W 24/10

(54) **Method for collecting status information related to an error occuring in an electronic device**

(30) Priority: 20.02.2013 US 201313771081
(71) Applicant: HTC Corporation, Taoyuan County 330 (TW)
(72) Inventor: Lai, Ching-Tsung, 330 Taoyuan City, Taoyuan County (TW); Chang, Yuan-Chun, 330 Taoyuan City, Taoyuan County (TW); Huang, Pei-Lun, 330 Taoyuan City, Taoyuan County (TW); Lee, Chiao-Ling, 330 Taoyuan City, Taoyuan County (TW)
(74) Representative: Emde, Eric

(57) **Abstract**

A method for collecting error status information of a mobile device is disclosed. The method comprises activating an status report program; capturing a screenshot of the electronic device; receiving input text from an user interface of the status report program; and transmitting the screenshot and the input text to a server provider by the status report program.

## Description

### Background of the Invention

### 1. Field of the Invention

The present invention relates to a method for collecting error status information of an electronic device, and more particularly, to a method for collecting a screenshot and user description text of an error status of an electronic device.

### 2. Description of the Prior Art

As related technology keeps improving, functions of a mobile device are getting more powerful. Current mobile devices can be utilized for making phone calls, executing satellite positioning, surfing the Internet, and making free Internet calls, etc. When mobile device performs multiple functions at the same time or executes some unstable application program, the mobile device may malfunction due to system or software bugs. Generally, when the mobile device encounters an error, the operating system or a status report program of the mobile device directly collects log data of the error status and transmits the log data of the error status to the server of the service provider via network, such as program developer or device manufacturer. By collecting information related to the error status, the service provider may analyze the log data to find out causes of the error issues so that the service provider may be able to provide solutions to the problem. However, the status report mechanism may only be triggered upon certain error conditions, such as system crash. When user encounters a trouble which does not fall into the categories of the status report mechanism, the mobile device would not send error report to the service provider. In this condition, the error issue cannot be reported immediately. Even the user sends feedback by other means, it would be impossible to obtain status information of the mobile device at the time the error happens, and thus increase the difficulty of analyzing such error.

The mobile device of the prior art can not provide enough information about the error status to the service provider. Therefore, collection of error status information of the mobile device is inefficient in the prior art.

### Summary of the Invention

An embodiment of the present invention provides a method for collecting error status information of en electronic device. The method comprises activating an status report program; capturing a screenshot of the electronic device; receiving input text from an user interface of the status report program; and transmitting the screenshot and the input text to a service provider by the status report program.

Another embodiment of the present invention further provides a method for collecting error status information of an electronic device. The method comprises: detecting an error by a hardware processor of the electronic device; capturing a screenshot of the electronic device in response to the error being detected; providing an user interface on a display screen of the electronic device for sending an error report; receiving at least one user input corresponding to the error report via the user interface; and sending the error report along with the screenshot to a service provider via a communication network; wherein the at least one user input comprises at least one of the following: text input; type option of the error; recovery option of the error.

Yet another embodiment of the present invention further provides an electronic device. The electronic device comprises: a processor, configured to detect an error of the electronic device and execute an error report program in response to the error being detected for collecting a status information of the electronic device and sending an error report; and a display screen, configured to provide an user interface corresponding to the error report program and receive user input corresponding to the error; wherein the user input comprises at least one of the options: type of the error, recovery status of the error, text description by an user; and the error report comprises at least the status information, a screenshot and the user input.

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a diagram showing an electronic device of the present invention.
FIG. 2 is a diagram showing a user interface displayed on the electronic device of FIG. 1.
FIG. 3 is a diagram showing another user interface displayed on the electronic device of FIG. 1.
FIG. 4 is a diagram showing the electronic device transmitting error information to a service provider via a communication network.
FIG. 5 is a flowchart showing a method for collecting error status information of the electronic device of the present invention.
FIG. 6 is another flowchart showing a method for collecting error status information of the electronic device of the present invention.

### Detailed Description

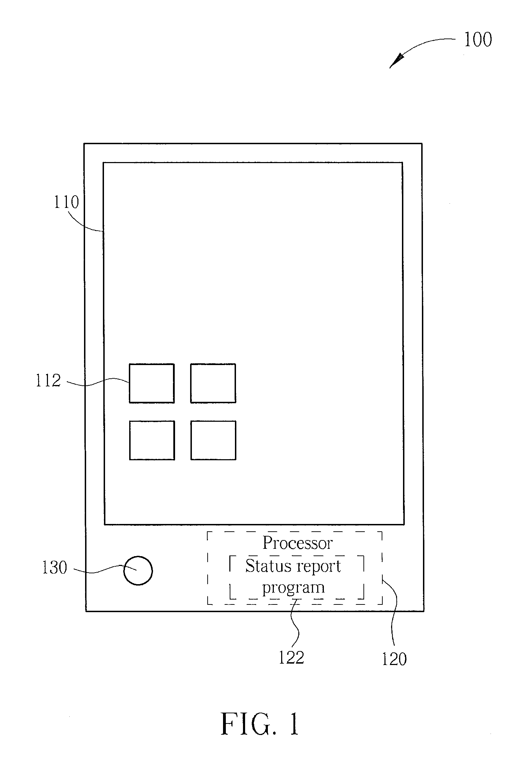

Please refer to FIG. 1. FIG. 1 is a diagram showing an electronic device according to an embodiment of the present invention. The electronic device may be a mobile device, for example smart phone, tablet, PDA, game console and/or others. As shown in FIG. 1, the electronic device 100 of the present invention comprises a display screen 110 and a processor 120. The processor 120 is configured for controlling operations of the mobile device 100, and running application programs, such as a status report program 122. When the mobile device 100 encounters an error due to system crash or software bug, the processor 120 can be notified to activate and execute the status report program 122 by certain hardware or software trigger mechanism. The status report program 122 may be activated manually or automatically, for example pressing a button 130 of the mobile device 100, or clicking on an icon 112 of the status report program 122 shown on the display unit 110. The button 130 may be disposed at other place than the position shown in FIG.1. In other embodiment of the invention, the status report program 122 may be automatically activated upon system crash or enabling of error recovery process.

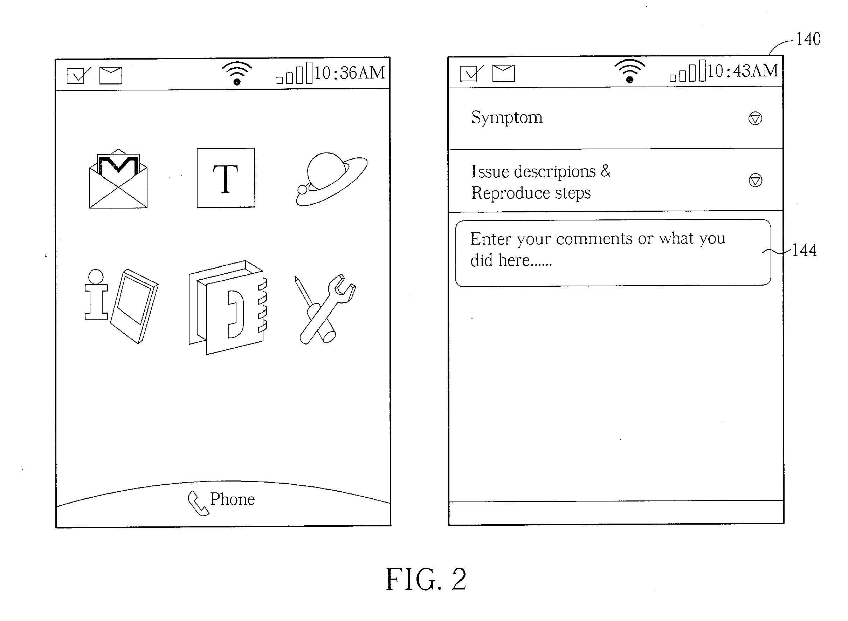

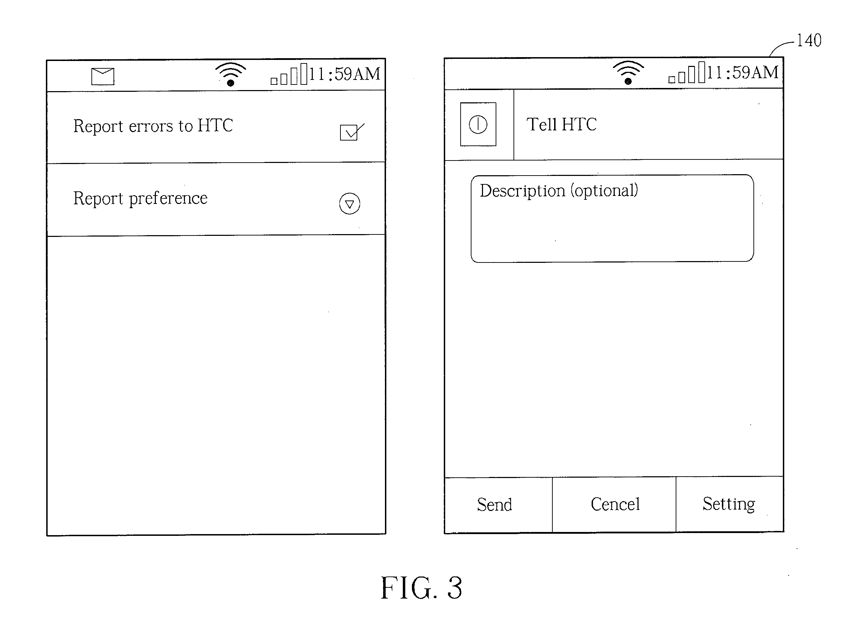

Please refer to FIG. 2 and FIG. 3, with reference to FIG. 1. FIG. 2 is a diagram showing an interface displayed on display screen 110 of the electronic device 100 of FIG. 1 according to an embodiment of the invention. As shown in FIG. 2, the status report program 122 may be activated by pressing the icon "User Trial Feedback." Please note that the name User Trial Feedback is just an example of the name of the status report program 122, but the present invention is not limited to this embodiment. In response to user input corresponding to the icon, the status report program 122 may be activated and present another interface to the user. The user interface may comprise, among others, a plurality of options allowing user to modify. The plurality of options may comprise, among others, a first option to select the type of error (Symptom), a second option to add description by user (Issue descriptions & reproduce steps), a third option to select how the device is recovered (How to recover), a fourth option to modify screenshot to be attached for upload (Screenshot). Please note that less or more options may be provided, and items of the options may vary and are not limited to the embodiment.

FIG. 3 illustrates a user interface of the status report program 122 according to another embodiment of the invention. In this embodiment, the user interface provides various setting options. The interface may comprise, among others, a first option to select whether to enable automatic error report when device encounters a problem (Report errors to HTC), a second option to select whether the error report is sent automatically, manually, or triggered by specified conditions (report preference), a third option to select which log file is attached in the report (report usage to HTC), and a fourth option to select in which network condition the report is sent, through data connection, Wi-Fi or cable connection (send reports). In the embodiment of FIG. 3, the user interface may also comprises an option for user to add text description, and another option to select whether to include location data before the error report is generated is sent.

As described above, in order to provide sufficient information to the application provider of the error status, the status report program 122 may collect various status data of the device, such as application log file, device log file, screenshots, and/or other related information. However, to protect privacy of user, the status report program 122 may collect whole or partial data of the device according to the option(s) set by user. That is, user is able to select which information he/she is willing to be sent in the error report. The user is also able to select what attachment(s) he/she prefers to upload as illustrated in FIGs. 2 and 3.

Now referring back o FIG. 1, the status report program 122 may be triggered in various way. In one embodiment of the invention, the status report program 122 may be triggered by pressing the button 130. The button 130 may be implemented as a hardware button disposed at bottom, top, or one of the edges of the device shell. The button 130 may be a dedicated hardware key or a virtual key activated by touch sensor. The button 130 may be a software button in another embodiment of the invention. In yet another embodiment of the invention, the status report program 122 is triggered by combination of the hardware button 130 and other software or hardware button (s) of the electronic device 100. Moreover, the status report program 122 may be triggered automatically without input from the button 130, for example in response to an error detected by the processor 120. In yet another embodiment of the invention, the status report program 122 is triggered after the electronic device 100 is recovered from error. For example, some serious system crash may result in device restart or device idle. In such case, the user cannot operate the electronic device 100. The processor 120 may record the error status, capture a screenshot, and/or record all relevant data before the electronic device 100 is recovered or restarted from error. When the electronic device 100 returns to normal operation, the processor 120 then activates the status report program 122 for sending error report with previous recorded data.

In yet another embodiment of the invention, the status report program 122 may be triggered at predefined conditions for sending device status data even no error is encountered. For example the status report program 122 may be triggered periodically, say once per day at a time specified, for uploading device status. The status report program 122 may automatically collect device status, application log data, and/or other information related to the device usage, activities, etc. The status report program 122 may also be triggered, for example, in response to the electronic device 100 is connected to an external power supply or certain network connection. Furthermore, the status report program 122 may be triggered when the electronic device 100 has Wi-Fi connection, or in other conditions, even can be combinations of above.

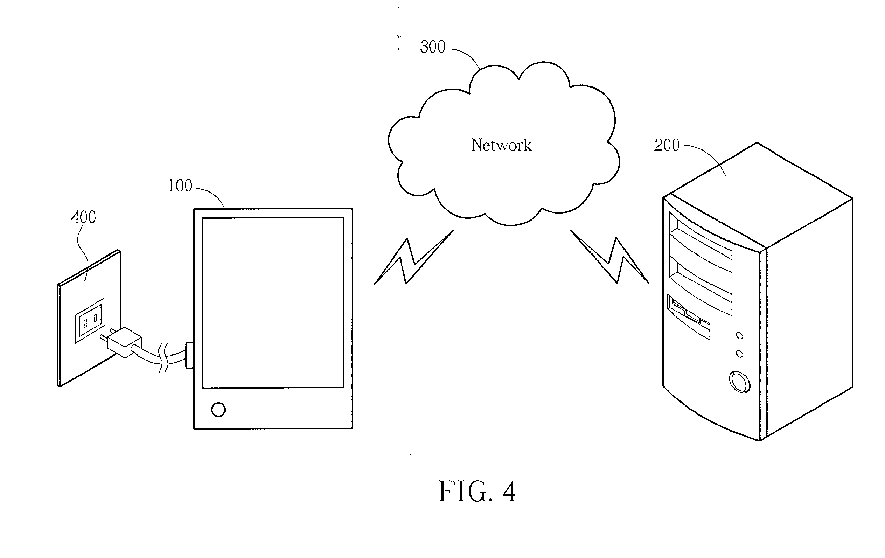

FIG. 4 is a diagram showing the electronic device 100 transmitting error status information to a server 200 via a network 300. Upon the status report program 122 is activated and executed by the processor 120, the status report program 122 captures a screenshot of the error status and displays the user interface 140 on the display screen 110 of the electronic device 100. Also with reference of FIG. 2, the screenshot is then attached to the user interface 140 by the status report program 122, and the user interface 140 provides an input area 144 for receiving input text inputted by the user in order to provide description of the error status or any suggestions to a service provider. Thereafter, the user can utilize the user interface 140 to transmit the screenshot and the input text to a server 200 of the service provider via a network 300. In addition, the status report program 122 can further collect log data of the error status in order to transmit the error status of the electronic device 100 along with the screenshot and the input text to the server 200 of the service provider for analyzing the error status. Since data size of the log data of the error status is usually large, in order to speed up processes of transmitting error status information to the server 200, the interface 140 can further provide options for allowing the user to select a symptom corresponding to the error status, such that the status report program 122 can only transmit partial log data of the error status corresponding to the selected symptom along with the screenshot and the input text to the server 200 of the service provider. On the other hand, the status report program 122 can detect whether the electronic device 100 is coupled to an external power source 400 for charging, and when the electronic device 100 is coupled to the external power source 400 for charging, the status report program 122 can then transmit the whole log data of the error status to the server 200 via the network 300 during charging, such that the electronic device 100 will not lose power when transmitting the whole log data of the error status to the server 200 via the network 300.

According to the above arrangement, the service provider can obtain more error status information, such as the screenshot of the error status and feedback of the user, in order to analyze the log data of the error status more precisely.

In addition, in order to provide more information to the service provider, the user interface 140 can provide options for allowing the user to select an impact level corresponding to the error status, and transmit the selected impact level to the server 200 of the service provider via the network 300, such that the service provider can determine whether the error status is a major or minor issue to the user. Moreover, the user interface 140 can further provide options for selecting whether log data of a usage status of the electronic device 100 is allowed to be collected, and if the user selects to allow the log data of the usage status of the electronic device 100 to be collected, the interface 140 can transmit the log data of the usage status of the electronic device 100 to the server 200 via the network 300 periodically, such that the service provider can obtain more information about regular usage status of the electronic device 100.

When the status report program 122 is activated and executed by the processor 120, the status report program 122 can capture a plurality of screenshots of the error status, and the interface 140 can provide options for allowing the user to select a screenshot (or multiple screenshots) among the plurality of screenshots of the error status to be attached to the user interface 140, such that the selected screen shot can demonstrate the error status more accurately.

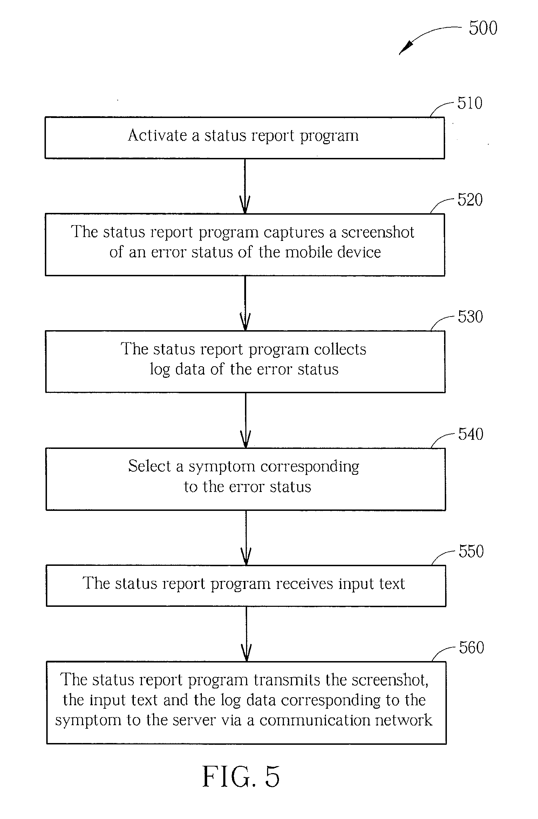

Please refer to FIG. 5 which illustrates a flowchart 500 showing a method for collecting error status information of the electronic device 100 of the present invention. The flowchart 500 of the method for collecting error status information of the electronic device 100 comprises the following steps:

Step 510: Activate a status report program. The status report program may be activated by certain trigger mechanism, such as hardware button or software error detection. The status report program may also provide n user interface on the display screen of the electronic device.

Step 520: The status report program captures a screenshot of an error status of the mobile device. The screenshot may be captured upon activation of the status report program or manually captured by user.

Step 530: The status report program collects log data of the error status. The log data may be selected according to user setting or other conditions. For example, user may define which log data to be collected upon which type of error is encountered or which network or charger connection is applied currently.

Step 540: Select a symptom corresponding to the error status. The symptom options may be provided on the user interface of the status report program.

Step 550: The status report program receives input text. The user interface of the status report program may also provide options for user to input his/her feedback or comments regarding the error issue.

Step 560: The status report program transmits the screenshot, the input text and the log data corresponding to the symptom to the server via a communication network.

Basically, to achieve the same result, the steps of the flowchart 500 need not be in the exact order shown and need not be contiguous, that is, other steps can be intermediate.

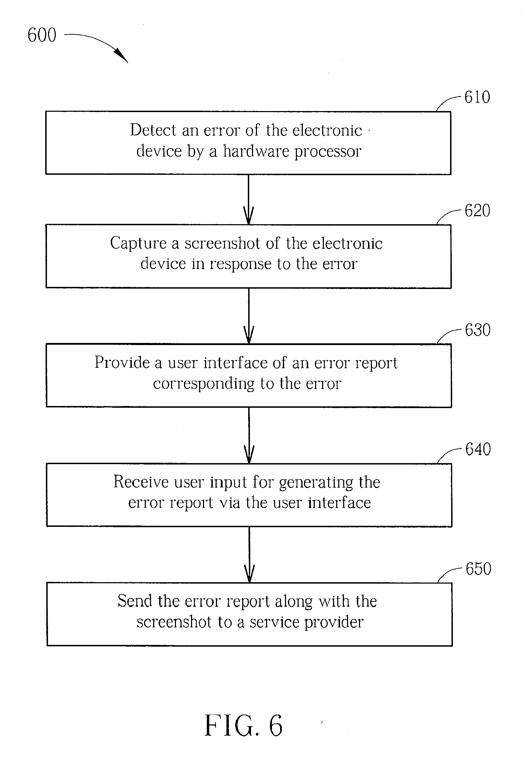

FIG. 6 illustrates a method for sending error report of an electronic device according to another embodiment of the invention. The electronic device may be a mobile device such as mobile phone, tablet, game console and/or others. And the method may be implemented in the electronic device and be executed by certain hardware component of the electronic device, such as a hardware processor. The flowchart 600 of the method for sending error report comprises the following steps:

Step 610: Detect an error of the electronic device by a hardware processor. The error may be, for example, system crash or application error. The error may also be detected upon certain kind of trigger mechanism.

Step 620: Capture a screenshot of the electronic device in response to the error. The screenshot may be captured automatically upon the error is detected, or upon trigger of user input. For example, user may perform screenshot capture by certain inputs of the electronic device. In one embodiment of the invention, the inputs may be combination of hardware button and software key, such as power button and home key.

Step 630: Provide a user interface of an error report corresponding to the error. In response to the error, the processor may launch a user interface for error reporting. The user interface may comprise a plurality of options that can be configured by user.

Step 640: Receive user input for generating the error report via the user interface. The user interface may provide options for selecting symptom type of error, impact level of the error, screenshot to be attached, and log data of usage status. The log data may also be selected according to status of communication network. For example, send partial log data if current communication network is data network and send complete log data if is Wi-Fi network. The user interface may also receive text description from the user so that user may add any feedback/comments he/she would like to deliver.

Step 650: Send the error report along with the screenshot to a service provider. Once the error report is customized, the error may be sent to the service provider upon acknowledgement of user (for example, pressing send report), or automatically. The service provider may also be a device manufacturer, application developer, or any point of service.

Please note that in another embodiment of the invention, the screenshot and log data of the electronic device may be recorded upon the error being detected and prior to restart of the electronic device. In some circumstances, the electronic device may need to be restarted to resume normal operation. As a result, error report cannot be generated

immediately upon occurring of error. In such cases, status information related to the error and screenshot at that moments may be captured and stored in the electronic device before it is restarted. After the electronic device is restarted, user interface of the error report may be launched automatically for user to select options and/or add additional descriptions.

In contrast to the prior art, the present invention provides a method for collecting error status information of a mobile device, in order to provide more error status information to the service provider for analyzing the error status more precisely. Moreover the status report program can first transmit the log data (partial or complete) of the error status corresponding to the symptom to the server, and then transmit the whole log data of the error status to the server during charging, so as to reduce power loss of the mobile device during data transmission.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method for collecting error status information of an electronic device, comprising:
activating an status report program;
capturing a screenshot of the electronic device;
receiving input text from an user interface of the status report program; and
transmitting the screenshot and the input text to a service provider by the status report program.

2. The method of claim 1, further comprising:
providing options for selecting a symptom corresponding to the error status via the user interface; and
collecting log data corresponding to the error status by the status report program.

3. The method of claim 2, further comprising:
detecting whether the electronic device is coupled to an external power source; and
in response to the electronic device being coupled to the external power source, the status report program transmitting whole log data of the electronic device to the service provider.

4. The method of claim 1, further comprising:
selecting an impact level corresponding to the error status via the user interface;
collecting log data of a usage status of the electronic device by the status report program; and
transmitting the log data of the usage status of the electronic device to the service provider periodically by the status report program.

5. A method for sending error report of an electronic device, comprising:
detecting an error by a hardware processor of the electronic device;
capturing a screenshot of the electronic device in response to the error being detected;
providing an user interface on a display screen of the electronic device for generating an error report;
receiving at least one user input corresponding to the error report via the user interface; and
sending the error report along with the screenshot to a service provider via a communication network;
wherein the at least one user input comprises at least one of the following: text input; type option of the error; recovery option of the error.

6. The method of claim 5, further comprising:
providing options for selecting a symptom corresponding to the error status on the user interface;
providing options for selecting an impact level corresponding to the error status on the user interface; and
providing options for selecting the screenshot among a plurality of screenshots of the error status to be attached to the error report.

7. The method of claim 5 further comprising:
providing options for selecting whether log data of a usage status of the mobile device is allowed to be collected; and
when the log data of the usage status is configured to be transmitted to the service provider periodically.

8. An electronic device, comprising:
a processor, configured to detect an error of the electronic device and execute an error report program in response to the error being detected for collecting a status information of the electronic device and sending an error report; and
a display screen, configured to provide an user interface corresponding to the error report program and receive user input corresponding to the error;
wherein the user input comprises at least one of the following: type of the error, recovery status of the error, text description by an user; and the error report comprises at least the status information, a screenshot and the user input.

9. The electronic device of claim 8, wherein the user interface provides options for selecting at least one of the followings:
a symptom corresponding to the error, an impact level corresponding to the error, and a screenshot among a plurality of screenshots to be attached to the error report.

10. The electronic device of claim 8, wherein the user interface provides options for selecting whether log data of a usage status of the electronic device is allowed to be collected.

11. The electronic device of claim 8, further comprising:
a button, configured to trigger capturing of the screenshot and to activate the error report program; wherein the button is selected from: a hardware button, a software button or combination of above.

12. The electronic device of claim 8, wherein the error report program is further configured to collect the status information and send the status information periodically.

13. The electronic device of claim 8, wherein the processor is further configured to capture the screenshot and record the status information prior to restart of the electronic device and execute the error report program upon the electronic device being restarted.
